(19) Europäisches Patentamt / European Patent Office / Office européen des brevets

(11) **EP 3 373 203 B1**

(12) **EUROPEAN PATENT SPECIFICATION**

(45) Date of publication and mention of the grant of the patent:
**05.05.2021 Bulletin 2021/18**

(51) Int Cl.:
**G06K 9/00** *(2006.01)*  **A01D 46/30** *(2006.01)*

(21) Application number: **18160767.2**

(22) Date of filing: **08.03.2018**

(54) **EQUIPMENT OF LOCALIZATION OF PEDUNCLE AND METHOD OF LOCALIZATION OF PEDUNCLE**

AUSRÜSTUNG ZUR LOKALISIERUNG EINES STIELS UND VERFAHREN ZUR LOKALISIERUNG EINES STIELS

ÉQUIPEMENT ET PROCÉDÉ DE LOCALISATION DE PÉDONCULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2017 JP 2017044708**

(43) Date of publication of application:
**12.09.2018 Bulletin 2018/37**

(73) Proprietor: **Panasonic Corporation Osaka 571-8501 (JP)**

(72) Inventors:
• **TOSHIMA, Ryou Osaka, 540-6207 (JP)**
• **ARAKI, Hidekazu Osaka, 540-6207 (JP)**
• **KAWANO, Hajime Osaka, 540-6207 (JP)**

(74) Representative: **Eisenführ Speiser Patentanwälte Rechtsanwälte PartGmbB Postfach 10 60 78 28060 Bremen (DE)**

(56) References cited:
WO-A1-2009/128712   JP-A- 2000 092 952
JP-A- 2001 095 348   JP-B2- 3 277 529
US-A- 3 606 750   US-A1- 2015 015 697

• I Dewa ET AL: "3-D Vision Sensor for Cherry Tomato Harvesting Robot", JARQ, 1 January 1997 (1997-01-01), pages 257-264, XP055735410, Retrieved from the Internet: URL:https://www.jircas.go.jp/sites/default /files/publication/jarq/31-4-257-264_0.pdf [retrieved on 2020-09-30]

**Description**

Technical Field

The present invention relates to a peduncle position estimating apparatus and a peduncle position estimating method for estimating the position of a peduncle coupled with fruits such as tomatoes.

Background Art

US 2015/015697 A1 discloses a system for plant parameter detection, including: a plant morphology sensor having a first field of view and configured to record a morphology measurement of a plant portion and an ambient environment adjacent the plant, a plant physiology sensor having a second field of view and configured to record a plant physiology parameter measurement of a plant portion and an ambient environment adjacent the plant, wherein the second field of view overlaps with the first field of view; a support statically coupling the plant morphology sensor to the physiology sensor, and a computing system configured to: identify a plant set of pixels within the physiology measurement based on the morphology measurement; determine physiology values for each pixel of the plant set of pixels; and extract a growth parameter based on the physiology values

Another example of a prior art document which teaches to determine the center positions of fruits connected with a peduncle in images acquired with a 3D vision sensor is Subrata et al. - "3-D Vision Sensor for Cherry Tomato Harvesting Robot", JARQ 31, pp. 257-264, 1997.

Today the agricultural environment in Japan faces very challenging circumstance due to labor shortage under the influence of the increasingly graying society. According to the Ministry of Agriculture, Forestry and Fisheries, the number of core agricultural workers is 1,680,000 as of 2014, and the number has been reduced by approximately 230,000 in the last five years.

The labor shortage under the influence of the increasingly graying society is also evident from the fact that the average age is 66.5, and that the number of the people who want to newly become farmers is decreasing. Moreover, the total area of deserted arable lands has reached 400,000 ha, negatively influencing the agricultural environment and the living environment.

Under such circumstances, automated agriculture is an important countermeasure against the labor shortage. According to "Market trend in robot industries in 2012" issued by the Ministry of Economy, Trade and Industry, it is estimated that the domestic market of agricultural robot will sharply grow up to a market of approximately 2,200 hundred million yen.

As such a robot, PTL 1 discloses a robot for harvesting fruits. This harvest robot picks up an image of a bunch of fruits with an image sensor camera, detects the positions of the fruits and the peduncle of the bunch, and exerts a force on the centers of the fruits and the peduncle with an end effector to pick up the fruits (see, for example, PTL 1).

Citation List

Patent Literature

PTL 1
Japanese Patent Application Laid-Open No. 2010-207118

Summary of Invention

Technical Problem

In the harvest robot disclosed in PTL 1, to determine the proper insertion direction of the end effector, it is necessary to detect the positions of the fruits and the peduncle.

As such, the position of the peduncle can be detected and the proper insertion direction of the end effector can be determined in the case where the peduncle can be recognized from the image picked up by the image sensor camera; however, the position of the peduncle cannot be detected and the proper insertion direction of the end effector cannot be determined in the case where the peduncle cannot be recognized because of the peduncle located behind a fruit and the like. Consequently, the harvest cannot be stably performed.

To solve such problems, an object of the present invention is to provide a peduncle position estimating apparatus and a peduncle position estimating method that can achieve a stable harvesting motion by estimating the position of the peduncle even in the case where the peduncle cannot be recognized as viewed from the image sensor side because of the peduncle located behind fruits and the like.

Solution to Problem

To achieve the above-mentioned object, a peduncle position estimating apparatus (a equipment of localization of peduncle) of an embodiment of the present invention is provided as defined in claim 1.

In addition, a peduncle position estimating method (a method of localization of peduncle) of an embodiment of the present invention is provided as defined in claim 5.

Advantageous Effects of Invention

According to the present invention, it is possible to estimate the position of the peduncle even in the case where the peduncle cannot be recognized as viewed from the image sensor side because of the peduncle located behind fruits and the like, and to achieve a stable harvesting motion. That is, regardless of the positional relationship between the harvesting object fruit and the peduncle, the insertion direction of the end effector can be determined, and a stable harvesting motion can be performed.

Brief Description of Drawings

FIG. 1 illustrates an exemplary peduncle position estimating apparatus that estimates the position of the peduncle;
FIG. 2 illustrates an exemplary end effector that is provided in a harvesting apparatus for cherry tomatoes;
FIG. 3A illustrates a harvesting motion of the end effector used in the present invention;
FIG. 3B illustrates a harvesting motion of the end effector used in the present invention;
FIG. 3C illustrates a harvesting motion of the end effector used in the present invention;
FIG. 4 is a flowchart of an exemplary peduncle position estimating process for estimating the position of the peduncle;
FIG. 5 is an exemplary image of cherry tomatoes and a peduncle captured by emitting IR light;
FIG. 6 is a flowchart of an exemplary process of detecting a bright spot;
FIG. 7 illustrates an exemplary binary image in a peduncle detection process;
FIG. 8 illustrates an exemplary image after a thinning process in the peduncle detection process;
FIG. 9 illustrates an exemplary image after a peduncle detection;
FIG. 10A illustrates an exemplary bunch of fruits that is an object of peduncle estimation;
FIG. 10B illustrates an exemplary bunch of fruits that is an object of peduncle estimation;
FIG. 11A is used for describing a distance between an estimated peduncle and fruits;
FIG. 11B is used for describing a distance between an estimated peduncle and fruits; and
FIG. 12 illustrates a structure of a bunch of cherry tomatoes.

Description of Embodiments

An embodiment of the present invention is described below with reference to the accompanying drawings. It is to be noted that the same components are denoted with the same reference numerals. While cherry tomato is described as an example of the fruit in the following description, the fruit is not limited to cherry tomato.

First, for easy understanding of the peduncle position estimating method of an embodiment of the present invention, (1) the form of cherry tomato as the harvesting object, and (2) a method of harvesting cherry tomatoes using a harvesting apparatus are described.

(1) Form of cherry tomato as the harvesting object

The cherry tomato as the harvesting object is a bunch of fruits such as a grape. The cherry tomato is harvested by harvesting each reddish matured fruit one by one, not by collectively harvesting a bunch of a plurality of fruits close to each other in the bunch. The reason for this is that the degree of maturity is different among fruits in a bunch. In general, cherry tomatoes are eaten fresh, and therefore required to be harvested together with the calyx without damaging the fruit surface.

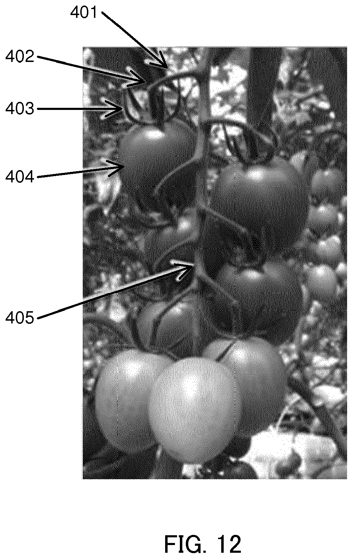

FIG. 12 illustrates a structure of a bunch of cherry tomatoes. As illustrated in FIG. 12, a single bunch includes a stem called peduncle 405 at its center. Sub-peduncle 401 and calyx 403 grow from peduncle 405, and fruit 404 grows at the end thereof.

There is a portion called abscission layer 402 in the middle of sub-peduncle 401, and when a force is applied to sub-peduncle 401, sub-peduncle 401 is divided at abscission layer 402. The present invention is targeted to fruits having such an abscission layer.

(2) Method of harvesting cherry tomato using harvesting apparatus

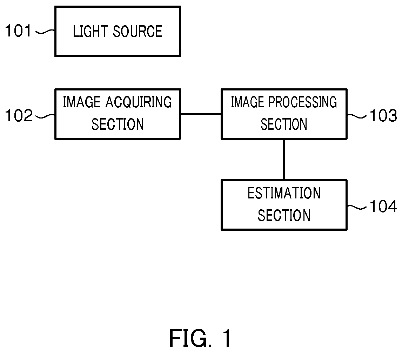

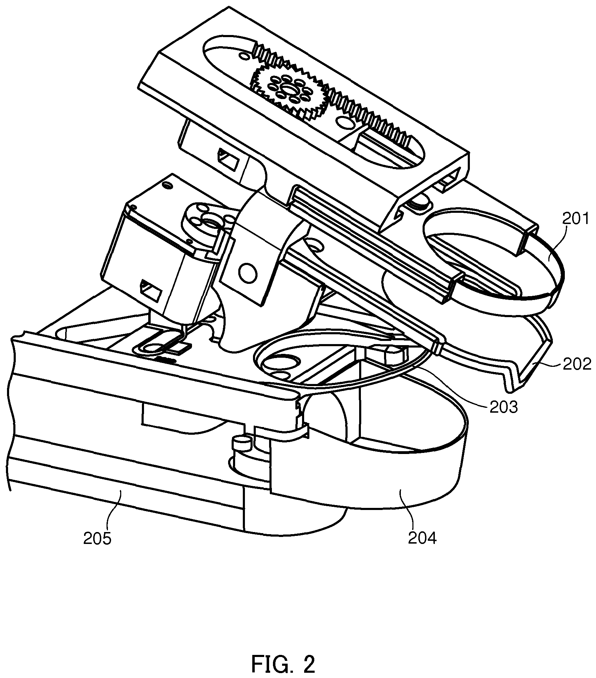

Next, an operation in which sub-peduncle 401 is divided at abscission layer 402 using an end effector is described. FIG. 1 illustrates an exemplary peduncle position estimating apparatus that estimates the position of the peduncle. FIG. 2 illustrates an exemplary end effector provided in a harvesting apparatus for cherry tomatoes. For example, the peduncle position estimating apparatus illustrated in FIG. 1 is mounted in the harvesting apparatus illustrated in FIG. 2.

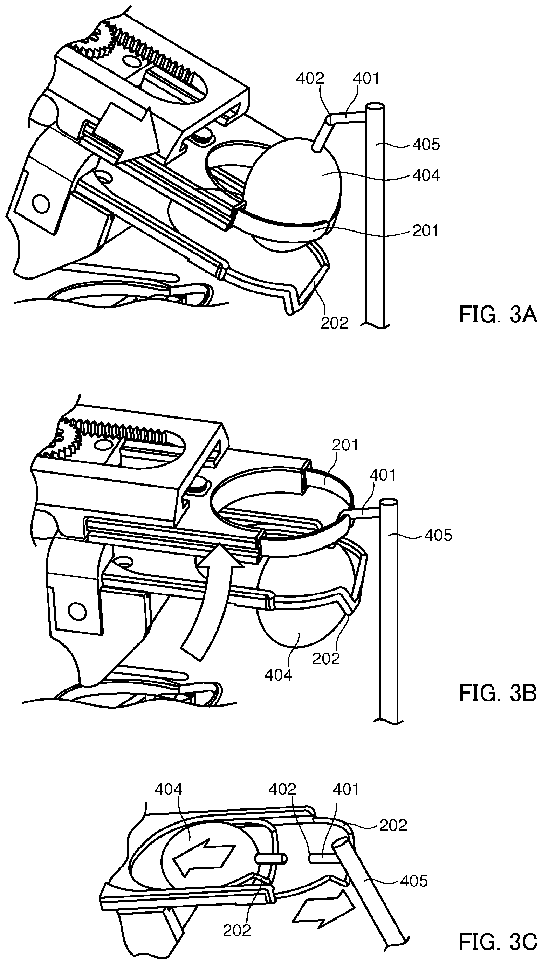

In addition, FIG. 3A to FIG. 3C illustrate a harvesting motion of the end effector. To be more specific, FIG. 3A illustrates a motion of pulling cherry tomato 404, FIG. 3B illustrates an insertion motion of harvesting ring 202, and FIG. 3C illustrates separation and harvesting motion of cherry tomato 404.

As illustrated in FIG. 2, the end effector includes pulling guide 201, harvesting ring 202, harvesting fruit guide 203, harvesting fruit seat 204, and robot arm 205. Harvesting ring 202 can be separated into upper and lower parts, and the upper part can be moved relative to the lower part.

As illustrated in FIG. 3A, pulling guide 201 pulls cherry tomato 404 to be harvested so as to form a space from other cherry tomatoes (not illustrated). Next, as illustrated in FIG. 3B, harvesting ring 202 is inserted to the space, and sub-peduncle 401 slips through the slit provided at the front part of pulling guide 201, whereby cherry tomato 404 is separated from pulling guide 201.

Thereafter, as illustrated in FIG. 3C, the upper part of harvesting ring 202 is moved relative to the lower part to draw cherry tomato 404 and push peduncle 405. In this manner, sub-peduncle 401 is stretched, and cherry tomato 404 is separated at abscission layer 402.

In the above-mentioned motions, the end effector is required to be inserted from the direction of a line connecting the center of cherry tomato 404 and the position of peduncle 405 as much as possible, and therefore the positions of cherry tomato 404 and peduncle 405 are required to be detected.

The following elaborates a method which can estimate the position of peduncle 405 in detection of peduncle 405 that is required for locating and harvesting cherry tomato 404 from a bunch even in the case where the position of peduncle 405 cannot be recognized in an image picked up with a sensor.

First, an example configuration of the peduncle position estimating apparatus that estimates the position of peduncle 405 is described with reference to FIG. 1. The position estimating apparatus includes light source 101, image acquiring section 102, image processing section 103, and estimation section 104.

Light source 101 emits light in the direction toward the bunch of cherry tomato 404 as the harvesting object. The reason for this is to detect cherry tomato 404 by picking up an image of the reflection light of the emitted light with image acquiring section 102 that is an image sensor, and, for example, an IR (InfraRed) light source is used as light source 101.

In addition, a TOF (Time-of-Flight) camera which can acquire a distance image from the subject in addition to RGB (Red, Green, Blue) color images and IR images is used as image acquiring section 102.

When three kinds of images, an RGB color image, an IR image, and a distance images, which are acquired by image acquiring section 102 are input to processing section 103, image processing section 103 executes image processing described below, and recognizes the position of cherry tomato 404 and/or peduncle 405. Further, in the case where peduncle 405 cannot be recognized with image processing section 103, estimation section 104 estimates the position of peduncle 405 based on the results of the image processing of image processing section 103.

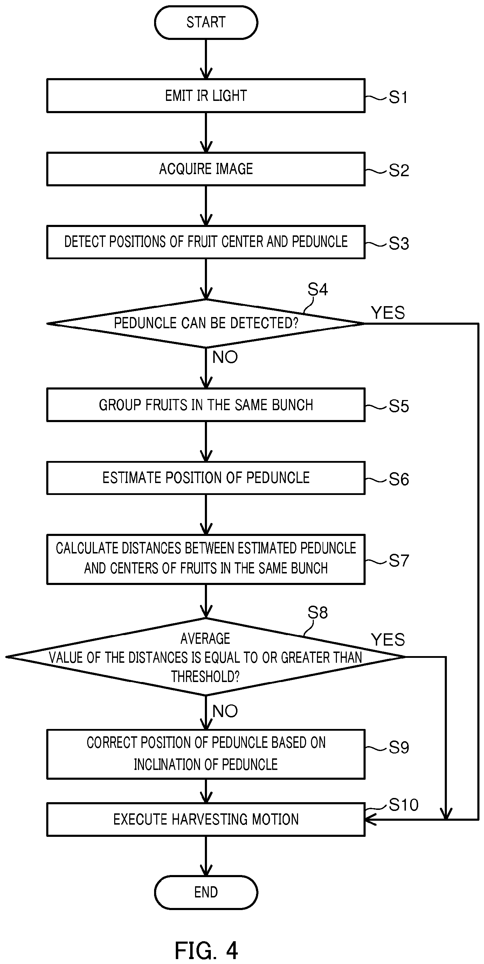

Next, an exemplary peduncle position estimating method for estimating the position of peduncle 405 is described. FIG. 4 is a flowchart of an exemplary peduncle position estimating process for estimating the position of peduncle 405.

In this estimating process, first, light source 101 emits IR light (step S1). Then, image acquiring section 102 picks up an image of cherry tomato 404, and acquires an RGB color image, an IR image, and a distance image (step S2).

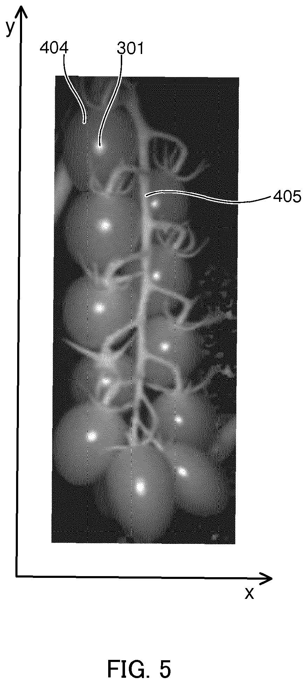

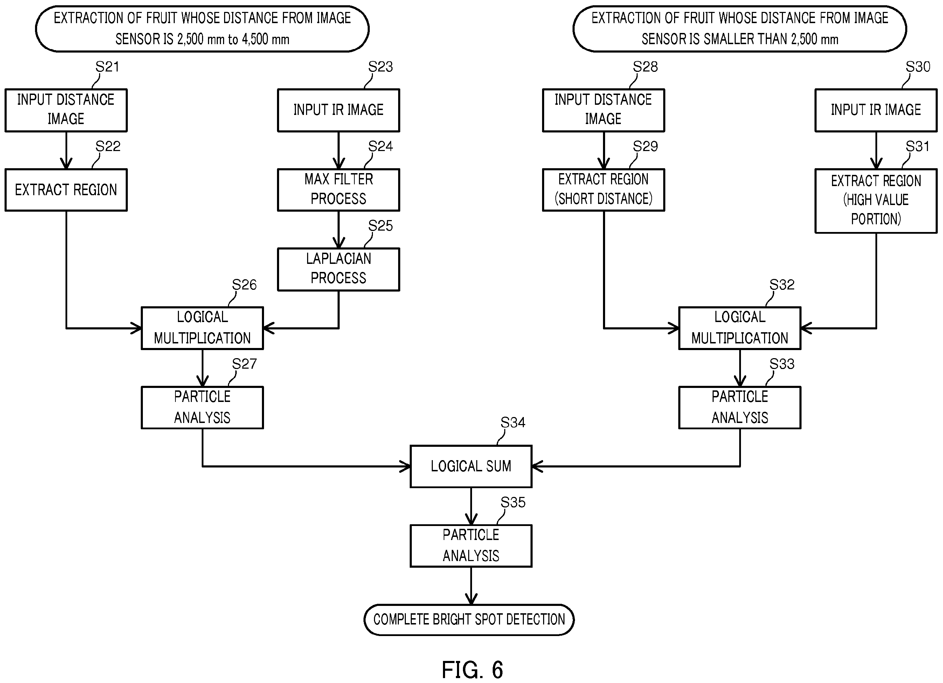

When the IR light emitted from light source 101 is reflected by the surface of cherry tomato 404, the resulting reflection light is detected as a bright spot. Therefore, image processing section 103 detects a bright spot from the IR image to thereby detect the center position of cherry tomato 404. In addition, image processing section 103 performs image processing on the IR image, and detects the position of peduncle 405 (step S3). These detection processes are elaborated with reference to FIG. 5 and FIG. 6.

Thereafter, estimation section 104 determines whether image processing section 103 has detected peduncle 405 (step S4). When it is determined that peduncle 405 is detected (YES at step S4), a harvesting motion is executed using the information on detected peduncle 405 (step S10).

When it is determined that peduncle 405 is not detected (NO at step S4), the processes of estimating the position of peduncle 405 subsequent to step S5 are performed.

To be more specific, estimation section 104 performs grouping for each bunch of cherry tomato 404 detected at step S3 (step S5). Then, estimation section 104 performs estimation of the position of peduncle 405 by main component analysis for each group of cherry tomato 404 (step S6).

Further, estimation section 104 calculates the distances between peduncle 405 whose position is estimated and the coordinate centers of cherry tomatoes 404 in the same bunch (step S7). Further, estimation section 104 determines whether the average value of the distances is not smaller than a predetermined threshold (step S8).

When the average value is not smaller than the predetermined threshold (YES at step S8), estimation section 104 estimates that cherry tomatoes 404 are located side by side in two lines in the image, and executes a harvesting motion by use of the information on the position of peduncle 405 estimated at step S6 (step S10).

When the average value is smaller than the predetermined threshold (NO at step S8), correction of the position of peduncle 405 is performed based on the inclination of an approximation positional line of peduncle 405 that is estimated at step S6 (step S9). Thereafter, a harvesting motion is performed by use of the corrected positional information of peduncle 405 (step S10).

The details of above-described steps are described below.

FIG. 5 illustrates an exemplary image of cherry tomato 404 and peduncle 405 captured by emitting IR light. In the image coordinate in the following description, the lower left of the image is the origin, the right direction is the forward direction of the x axis, and the upward direction is the forward direction of the y axis.

As illustrated in FIG. 5, there are bright spots 301, which are IR lights reflected by the surface of cherry tomato 404, in the proximity of the centers of each cherry tomato 404. Therefore, the center position of cherry tomato 404 can be estimated to be the position of bright spot 301.

FIG. 6 is a flowchart of an exemplary process of detecting bright spot 301. While the distance between image acquiring section 102 and cherry tomato 404 as the image pickup object is assumed to be 2,500 to 4,500 mm in the present embodiment, when the distance therebetween is smaller than this, the reflection light of IR light is saturated.

Therefore, in FIG. 6, the method of detecting bright spot 301 is changed depending on whether the distance is 2,500 mm 4,500 mm, or shorter than 2,500 mm.

To be more specific, in the case where the distance is 2,500 mm 4,500 mm, image processing section 103 receives input of the distance image (step S21), and extracts the region of 2,500 mm or greater from the distance image (step S22).

On the other hand, image processing section 103 receives input of the IR image (step S23), and performs a MAX filter process on the IR image (step S24), and further, performs a Laplacian process (step S25).

Thereafter, image processing section 103 performs logical multiplication computation of the distance image from which the region of 2,500 mm or greater is extracted, and the IR image subjected to the MAX filter process and the Laplacian process (step S26). Further, image processing section 103 performs particle analysis on the resulting image (step S27).

In the case where the distance is shorter than 2,500 mm, image processing section 103 receives input of the distance image (step S28), and extracts the region of shorter than 2,500 mm from the distance image (step S29).

In addition, image processing section 103 receives input of the IR image (step S30), and extracts the region where the image gradation is saturated (a portion where gradation value is high) in the IR image (step S31).

Thereafter, image processing section 103 performs logical multiplication computation of the distance image from which the region of shorter than 2,500 mm is extracted, and the IR image from which the region where the image gradation is saturated is extracted (step S32). Further, image processing section 103 performs particle analysis on the resulting image (step S33).

Finally, image processing section 103 performs logical sum computation of the image subjected to the particle analysis at step S27, and the image subjected to the particle analysis at step S33 (step S34). Then, image processing section 103 performs particle analysis on the resulting image to thereby detect the bright spot (step S35).

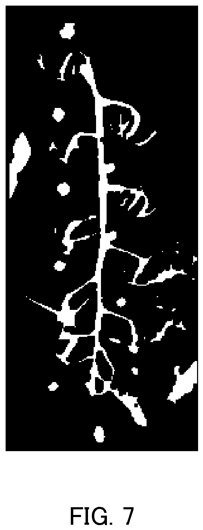

Next, the process of detecting peduncle 405 in step S3 of FIG. 4 is elaborated. The IR image is used also in detection of peduncle 405. To be more specific, image processing section 103 extracts a portion where the luminance is higher than a predetermined threshold from the image illustrated in FIG. 5, and performs a binary conversion process. An exemplary image obtained in this manner is illustrated in FIG. 7.

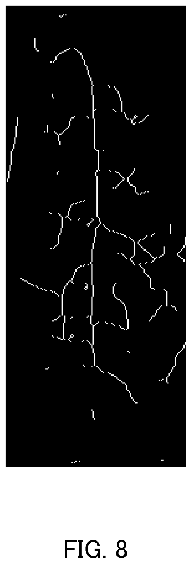

Then, image processing section 103 removes the region whose planar dimension is equal to or smaller than a predetermined planar dimension, and performs a thinning process. In this manner, candidates of peduncle 405 are extracted. The image obtained in this manner is illustrated in FIG. 8.

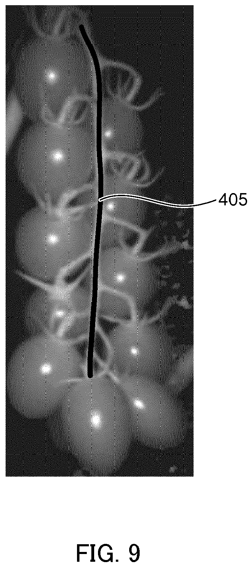

Further, image processing section 103 again removes the region whose planar dimension is equal to or smaller than a predetermined planar dimension, to thereby detect peduncle 405 from among candidates of peduncle 405. FIG. 9 illustrates peduncle 405 obtained through the above-mentioned processes.

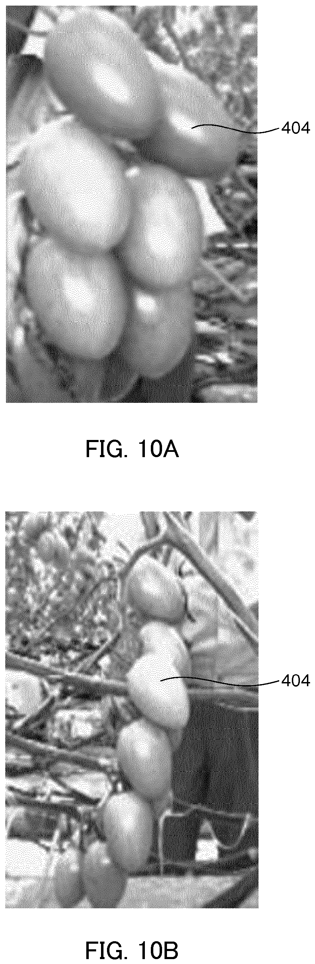

Peduncle 405 is detected in the above-mentioned manner; however, in the case where calyx 403 of cherry tomato 404 is located behind the bunch of cherry tomato 404 and calyx 403 of cherry tomato 404 cannot be seen as illustrated in FIG. 10A, or in the case where calyx 403 faces sideways with respect to the image sensor as illustrated in FIG. 10B, peduncle 405 cannot be recognized in the image acquired with the image sensor, and consequently peduncle 405 cannot be detected by the process of step S3 of FIG. 4.

In this case, the processes subsequent to step S5 of FIG. 4 are executed to estimate the position of peduncle 405. The processes subsequent to step S5 are elaborated below.

First, at step S5, estimation section 104 measures the distance between cherry tomatoes 404 by use of the center position coordinates of cherry tomatoes 404 detected at step S3 of FIG. 4. Then, estimation section 104 determines that cherry tomatoes 404 whose distance therebetween are equal to or smaller than a predetermined threshold are cherry tomatoes 404 belonging to the same bunch. Estimation section 104 performs the above-mentioned processes for all cherry tomatoes 404.

For example, the distance between cherry tomatoes 404, whose center position coordinates are A $(x_a, y_a)$ and B $(x_b, y_b)$, respectively, is calculated as follows.

[Ex.1]

$$D_{AB} = \sqrt{(x_a - x_b)^2 + (y_a - y_b)^2} \qquad \cdots (1)$$

Further, estimation section 104 performs a process of estimating peduncle 405 illustrated in step S6 of FIG. 4. To be more specific, estimation section 104 approximates peduncle 405 into a straight line by interpolation based on the information on the center position coordinates of cherry tomatoes 404 in the same bunch.

For example, estimation section 104 obtains the approximation straight line of peduncle 405 as a straight line passing through the gravity center (average value) of center positions $(x_1, y_1)$, $(x_2, y_2)$, ..., $(x_i, y_i)$ of groups of cherry tomatoes 404 in the same bunch and having inclination 0 (the angle between straight line and Y axis), which is calculated from the following expression based on main component analysis.

[Ex.2]

$$\theta = -0.5 \times \frac{2 \times \sum_1^i x_i y_i}{\sum_1^i x_i^2 - \sum_1^i y_i^2} \qquad \cdots (2)$$

Thereafter, estimation section 104 performs the distance calculation process illustrated in step S7 of FIG. 4. To be more specific, estimation section 104 calculates the average value of the distances between the estimated approximation straight line of peduncle 405 and cherry tomatoes 404 in the same bunch.

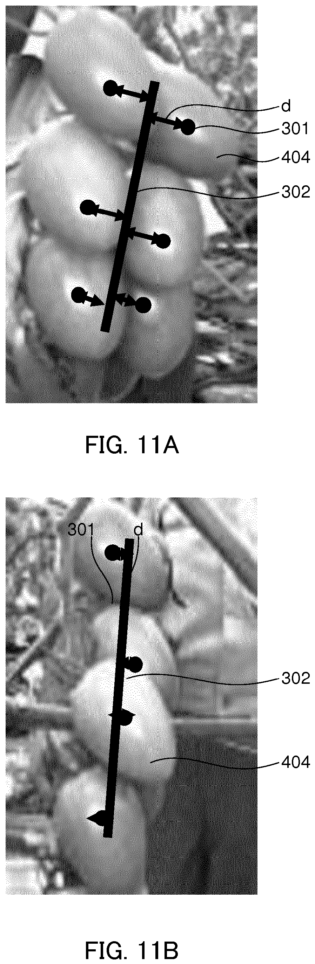

FIG. 11A and FIG. 11B are used for describing the calculation of distance d between bright spots 301 and approximation straight line 302 of peduncle 405. FIG. 11A and FIG. 11B illustrate approximation straight line 302 and bright spots 301 detected in the images of FIG. 10A and FIG. 10B, respectively.

As illustrated in FIG. 11A and FIG. 11B, estimation section 104 calculates the average value of distances d between bright spots 301 and approximation straight line 302.

As illustrated in FIG. 11A, in the case where calyxes 403 of cherry tomatoes 404 are located behind the bunch of cherry tomatoes 404, cherry tomatoes 404 are located in two lines when viewed from the image sensor, and approximation straight line 302 is obtained in the proximity of the center of the lines.

On the other hand, as illustrated in FIG. 11B, in the case where calyxes 403 face sideways with respect to the image sensor, cherry tomatoes 404 are located in a single line as viewed from the image sensor, and approximation straight line 302 is obtained at a position on cherry tomatoes 404. Accordingly, the average value of distances d of the case illustrated in FIG. 11A is greater than that of the case illustrated in FIG. 11B.

In view of the foregoing, as illustrated in step S8 of FIG. 4, estimation section 104 determines whether the average value of distance d is not smaller than the threshold, and when the average value of distance d is not smaller than the predetermined threshold, estimation section 104 estimates that calyx 403 of cherry tomato 404 is located behind the bunch of cherry tomato 404.

Here, in the case where cherry tomatoes 404 are located in two lines in close contact with each other as in FIG. 11A, the average value of distance d is a value equal to or approximately equal to the radius of cherry tomato 404, and it is therefore desirable to determine the threshold based on the radius of cherry tomato 404.

Here, it is considered that the error between the actual position of peduncle 405 and the position of approximation straight line 302 is acceptable in determination of the insertion direction of the end effector.

Accordingly, as the depth distance, estimation section 104 determines the position of cherry tomato 404 in the depth direction as a position obtained by adding a predetermined value to the distance of the surface of cherry tomato 404 obtained in the distance image, and then terminates the estimation of the position of peduncle 405. The predetermined value is, for example, a value equal to or approximately equal to the radius of cherry tomato 404.

On the other hand, when the average value of distance d is smaller than the predetermined threshold, estimation section 104 corrects the position of peduncle 405 based on the inclination of peduncle 405 as illustrated in at step S9 of FIG. 4.

For example, as illustrated in FIG. 10B, in the case where calyxes 403 face sideways with respect to the image sensor, cherry tomatoes 404 are located in a single line as viewed from the image sensor. In such a state, when the inclination of approximation straight line 302 (the ratio of the increase in the y direction to the increase in the x direction) is positive as in FIG. 11B for example, it is considered that the actual peduncle is on the left side of approximation straight line 302.

Therefore, estimation section 104 corrects the position of peduncle 405 by moving the position of peduncle 405 to the negative side in the x axis direction from approximation straight line 302 by a predetermined value. The predetermined value is, for example, a value equal to or approximately equal to the radius of cherry tomato 404.

On the other hand, when the inclination of approximation straight line 302 is negative, it is considered that actual peduncle 405 is located on the right side of approximation straight line 302, and therefore estimation section 104 corrects the position of peduncle 405 by moving the position of peduncle 405 to the positive side in the x axis direction by a predetermined value from approximation straight line 302. The predetermined value is, for example, a value equal to or approximately equal to the radius of cherry tomato 404.

In this manner, in the case where calyx 403 faces sideways with respect to the image sensor, estimation section 104 corrects the position of peduncle 405.

In the above description, the calculation is performed based on the distance in the coordinate of the image, that is, the two- dimensional coordinate in the grouping process of cherry tomato 404 at step S5 and the calculation process of the distance at step S7. This is on the assumption that the bunches of cherry tomatoes 404 do not overlap as viewed from the image sensor side.

However, depending on the state of the ridge where cherry tomatoes 404 are growing, the bunches might densely exist. In this case, the distance may be calculated in a three-dimensional coordinate instead of a two-dimensional coordinate.

In this case, when the coordinates of two cherry tomatoes 404 are expressed as A ($x_a$, $y_a$, $z_a$) and B (xb, $y_b$, $z_b$), Expression (1) can be modified as follows.

[Ex.3]

$$D_{AB} = \sqrt{(x_a - x_b)^2 + (y_a - y_b)^2 + (z_a - z_b)^2} \qquad \cdots (3)$$

After the above-mentioned processes, a harvesting work with the end effector is executed based on information on the positions of cherry tomatoes 404 and the estimated position of peduncle 405 as illustrated in step S10 of FIG. 4.

Industrial Applicability

The peduncle position estimating apparatus and the peduncle position estimating method of the embodiment of the present invention are applicable to any fruits in which fruits are close to each other around the peduncle in a bunch such as cherry tomatoes in a bunch.

Reference Signs List

101 Light source
102 Image acquiring section (image sensor)
103 Image processing section
104 Estimation section
201 Pulling guide
202 Harvesting ring
203 Harvesting fruit guide
204 Harvesting fruit seat
205 Robot arm
301 Bright spot
302 Approximation straight line
401 Sub-peduncle
402 Abscission layer
403 Calyx
404 Fruit

405 Peduncle

**Claims**

1. A equipment of localization of peduncle (405) comprising:

   an image acquiring section (102) that acquires an image of a plurality of fruits (404); and
   an estimation section (104) that estimates a position of a peduncle (405) that is coupled with the plurality of fruits (404), wherein the estimation determines a straight line by interpolation of center positions each assigned to a different fruit (404) and mutual distances among the plurality of fruits (404) in the image acquired by the image acquiring section (102).

2. The equipment of localization of peduncle (405) according to claim 1, wherein the estimation section (104) corrects the position of the peduncle (405) based on distances between the fruits (404) of the plurality of fruits (404) and the peduncle (405), and an inclination of the peduncle (405).

3. The equipment of localization of peduncle (405) according to claim 1 or 2 wherein:

   the image acquiring section (102) acquires a distance image including information on distances to the plurality of fruits (404); and
   the estimation section (104) corrects the position of the peduncle (405) based on the distance image.

4. The equipment of localization of peduncle (405) according to any one of claims 1 to 3 further comprising an image processing section (103) that detects the positions of the fruits (404) as bright spots (301) that are generated in the image when light emitted from a light source (101) is reflected by a surface of the fruit (404).

5. A method of localization of peduncle implemented on a equipment (405) comprising:

   acquiring (S2) an image of a plurality of fruits (404); and
   estimating (S6) a position of a peduncle (405) that is coupled with the plurality of fruits (404), wherein the estimating (S6) determines a straight line by interpolation of center positions each assigned to a different fruit (404) and mutual distances among the plurality of fruits (404) in the image obtained by the acquiring (S2).

**Patentansprüche**

1. Ausrüstung zur Lokalisierung eines Pedunkulus (405), mit:

   einem Bildbeschaffungsabschnitt (102), der ein Bild von mehreren Früchten (404) beschafft, und
   einem Abschätzungsabschnitt (104), der eine Position eines Pedunkulus (405) abschätzt, der mit den mehreren Früchten (405) gekoppelt ist, wobei die Abschätzung eine gerade Linie durch Interpolation von Mittelpositionen, die jeweils zu einer unterschiedlichen Frucht (404) zugeordnet sind, und gegenseitige Abstände zwischen den mehreren Früchten (404) in dem Bild bestimmt, das durch den Bildbeschaffungsabschnitt (102) beschafft wurde.

2. Ausrüstung zur Lokalisierung eines Pedunkulus (405) nach Anspruch 1, wobei der Abschätzungsabschnitt (104) die Position des Pedunkulus (405) auf Basis von Abständen zwischen den Früchten (404) der mehreren Früchte (404) und dem Pedunkulus (405) und einer Neigung des Pedunkulus (405) korrigiert.

3. Ausrüstung zur Lokalisierung eines Pedunkulus (405) nach Anspruch 1 oder 2, wobei:

   der Bildbeschaffungsabschnitt (102) ein Abstandsbild mit Information zu Abständen der mehreren Früchte (404) beschafft, und
   der Abschätzungsabschnitt (104) die Position des Pedunkulus (405) auf Basis des Abstandsbildes korrigiert.

4. Ausrüstung zur Lokalisierung eines Pedunkulus (405) nach einem der Ansprüche 1 bis 3, ferner mit einem Bildverarbeitungsabschnitt (103), der die Positionen der Früchte (404) als helle Punkte (301) erfasst, die in dem Bild erzeugt werden, wenn Licht, das von einer Lichtquelle (101) emittiert wird, durch eine Oberfläche der Frucht (404) reflektiert wird.

**5.** Verfahren zur Lokalisierung eines Pedunkulus (405), das in einer Ausrüstung implementiert ist, mit:

Beschaffen (S2) eines Bildes von mehreren Früchten (404), und
Abschätzen (S6) einer Position eines Pedunkulus (405), der mit den mehreren Früchten (404) gekoppelt ist, wobei das Abschätzen (S6) eine gerade Linie durch Interpolation von Mittelpositionen, die jeweils einer unterschiedlichen Frucht (404) zugewiesen sind, und gegenseitige Abständen zwischen den mehreren Früchten (404) in dem Bild bestimmt, das durch das Beschaffen (S2) erhalten wurde.

**Revendications**

**1.** Equipement de localisation de pédoncule (405) comprenant:

une section d'acquisition d'image (102) qui acquiert une image d'une pluralité de fruits (404), et
une section d'estimation (104) qui estime une position d'un pédoncule (405) qui est couplé à la pluralité de fruits (404), dans lequel l'estimation détermine une ligne droite par interpolation de positions centrales associées chacune à un fruit (404) différent et de distances mutuelles entre la pluralité de fruits (404) dans l'image acquise par la section d'acquisition d'image (102).

**2.** Equipement de localisation de pédoncule (405) selon la revendication 1, dans lequel la section d'estimation (104) corrige la position du pédoncule (405) sur la base de distances entre les fruits (404) de la pluralité de fruits (404) et le pédoncule (405), et d'une inclinaison du pédoncule (405).

**3.** Equipement de localisation de pédoncule (405) selon la revendication 1 ou 2, dans lequel:

la section d'acquisition d'image (102) acquiert une image de distance comprenant de l'information sur des distances de la pluralité de fruits (404), et
la section d'estimation (104) corrige la position du pédoncule (405) sur la base de l'image de distance.

**4.** Equipement de localisation de pédoncule (405) selon l'une quelconque des revendications 1 à 3, comprenant en outre une section de traitement d'image (103) qui détecte les positions des fruits (404) en tant que points clairs (301) qui sont générés dans l'image lorsque de la lumière émise par une source de lumière (101) est réfléchie par une surface du fruit (404).

**5.** Procédé de localisation d'un pédoncule (405), qui est implémenté dans un équipement, comprenant:

acquérir (S2) une image d'une pluralité de fruits (404), et
estimer (S6) une position d'un pédoncule (405) qui est couplé à la pluralité de fruits (404), dans lequel l'estimation (S6) détermine une ligne droite par interpolation de positions centrales associées chacune à un fruit (404) différent et de distances mutuelles entre la pluralité de fruits (404) dans l'image obtenue par l'acquisition (S2).

101 — LIGHT SOURCE

102 — IMAGE ACQUIRING SECTION — IMAGE PROCESSING SECTION — 103

ESTIMATION SECTION — 104

FIG. 1

FIG. 2

FIG. 3A

FIG. 3B

FIG. 3C

START

EMIT IR LIGHT — S1

ACQUIRE IMAGE — S2

DETECT POSITIONS OF FRUIT CENTER AND PEDUNCLE — S3

S4
PEDUNCLE CAN BE DETECTED? — YES

NO

GROUP FRUITS IN THE SAME BUNCH — S5

ESTIMATE POSITION OF PEDUNCLE — S6

CALCULATE DISTANCES BETWEEN ESTIMATED PEDUNCLE AND CENTERS OF FRUITS IN THE SAME BUNCH — S7

S8
AVERAGE VALUE OF THE DISTANCES IS EQUAL TO OR GREATER THAN THRESHOLD? — YES

NO

CORRECT POSITION OF PEDUNCLE BASED ON INCLINATION OF PEDUNCLE — S9

EXECUTE HARVESTING MOTION — S10

END

FIG. 4

FIG. 5

**FIG. 6**

FIG. 7

FIG. 8

FIG. 9

404

FIG. 10A

404

FIG. 10B

FIG. 11A

FIG. 11B

FIG. 12

**REFERENCES CITED IN THE DESCRIPTION**

**Patent documents cited in the description**

- US 2015015697 A1

- JP 2010207118 A

**Non-patent literature cited in the description**

- **SUBRATA et al.** 3-D Vision Sensor for Cherry Tomato Harvesting Robot. *JARQ,* 1997, vol. 31, 257-264